# EUROPÄISCHE PATENTSCHRIFT

(11) **EP 1 327 634 B1**
(45) Veröffentlichungstag und Bekanntmachung des Hinweises auf die Patenterteilung: **13.09.2006**
(21) Anmeldenummer: 02026985.8
(22) Anmeldetag: 05.12.2002
(51) Int. Cl.: C07C 209/08

(54) **Verfahren zur Herstellung von Aminoalkylsilanen und Alkylaminen**
Process for the preparation of aminoalkylsilanes and alkylamines
Procédé pour la préparation d'aminoalkylsilanes et d'alkylamines

(30) Priorität: 10.01.2002 DE 10200656
(43) Veröffentlichungstag der Anmeldung: 16.07.2003
(73) Patentinhaber: Consortium für elektrochemische Industrie GmbH, 81379 München (DE)
(72) Erfinder: Bauer, Andreas, Dr., 81371 München (DE); Jekat, Herbert, Prof.Dr., 83112 Frasdorf (DE); Rauch, Jochen, 84556 Kastl (DE); John, Peter, Dr., 84489 Burghausen (DE); Kohlmann, Wolfgang, 81739 München (DE); Frey, Volker, Dr., 84489 Burghausen (DE); Pachaly, Bernd, Dr., 84561 Mehring - Öd (DE)
(74) Vertreter: Fritz, Helmut

(56) Entgegenhaltungen:
- EP-A- 0 849 271
- DE-B- 2 749 316
- US-A- 4 234 502
- US-A- 4 234 503

## Beschreibung

Die Erfindung betrifft ein kontinuierliches Verfahren zur Herstellung von Alkylaminen aus Alkylhalogeniden durch Umsetzung mit Ammoniak unter Druck.

Spezielle Alkylamine wie z.B. 3-(Triethoxysilyl)-propylamin sind von großem wirtschaftlichen Interesse für eine Vielzahl von Bereichen. Sie werden eingesetzt u.a. als Haftvermittler in der Gießereitechnik und Glasfaser-Industrie oder aber auch als Vernetzer. Ein weiteres Beispiel stellt Hexamethylendiamin dar, welches in großem Umfang für die Herstellung von Polyamiden benötigt wird.

Die überwiegende Zahl an Patentveröffentlichungen beschäftigt sich mit der diskontinuierlichen Herstellung von Alkylaminen aus Alkylhalogenid-Vorstufen. Beispielsweise in US-A-4234502 ist die Herstellung von 3-(alkoxysilyl)-propyl-substituierten primären und sekundären Aminen beschrieben.

EP-A-849271 befaßt sich mit einem kontinuierlichen Verfahren zur Herstellung von 3-(Trialkoxy-silyl)-propylaminen. In diesem Prozeß wird 3-(Trialkoxysilyl)-propylchlorid mit Ammoniak im gewünschten Verhältnis gemischt und das Gemisch auf die Reaktionstemperatur aufgeheizt. Das Gemisch durchläuft einen Druckreaktor mit einer für die vollständige Umsetzung ausreichenden Verweilzeit, der gegebenfalls mehrere Temperaturzonen enthält. Besonders hervorgehoben wird eine "kritische" Temperatur von 110 °C. Unterhalb dieser Temperatur entsteht 3-(Trialkoxysilyl)-propylaminhydrochlorid, welches bei Aufheizen auf über 110 °C durch Ammoniak unter Freisetzung von freiem Amin und Ammoniumchlorid gespalten wird. Die komplizierte Aufarbeitung erfolgt zuerst durch Abkühlen des Reaktionsgemisches, wobei sich eine flüssige Silanphase abscheidet. Die Abscheidung der Silanphase muß gegebenfalls durch Zugabe eines Lösungsmittels erzwungen werden. Nach Trennung der organischen Phase von der ammoniumchlorid-haltigen Ammoniakphase mittels Extraktoren (Mixer-Settler) wird erstere destillativ aufbereitet. Zum Abtrennen des Ammoniumchlorids wird ein Teilstrom der Ammoniakphase entspannt, der freigewordene Ammoniak wieder kondensiert, verdichtet in den Prozeß zurückgeführt und das ausgefällte Salz isoliert.

Die bekannten Löslichkeiten von Ammoniumhalogeniden in flüssigem Ammoniak können in Abhängigkeit von der Temperatur auf bis zu 80 Gew.-% (Iodid) bei 55 °C ansteigen und betragen selbst bei -40 °C noch mindestens 10 Gew.-% (Chlorid). Daher ist eine weitgehende Abscheidung von in Ammoniak gelösten Ammoniumhalogeniden ohne vollständiges Verdampfen des Lösungsmittels sehr schwierig.

Es bestand die Aufgabe, ein verbessertes kontinuierliches Verfahren zur Herstellung von Aminoalkylverbindungen zu finden, welches eine selektive und kontinuierliche Abscheidung der einzelnen Reaktionsprodukte aus dem Reaktionsgemisch ohne Zusatz von Fremdstoffen erlaubt.

Gegenstand der Erfindung ist ein kontinuierliches Verfahren zur Herstellung von Alkylaminen, bei dem kontinuierliche Ströme von Ammoniak und Alkylhalogenid mit einem molaren Verhältnis von mindestens 10:1 in einem Druckreaktor zur Reaktion gebracht werden, die Endreaktionsmischung bei einer Temperatur > 80 °C, einem Druck > 40 bar und einem Ammoniumhalogenid-Gehalt von > 1 Gew.-% aus zwei Phasen besteht, die aufgetrennt werden, dadurch gekennzeichnet, dass es sich um die Phasen
A, welche mindestens 75 Gew.-% der Gesamtmenge an gebildetem Ammoniumhalogenid enthält und
B, welche mindestens 80 Gew.-% der Gesamtmenge an gebildetem Alkylamin enthält, handelt und
die Auftrennung der Endreaktionsmischung oberhalb des kritischen Punkts des Ammoniaks (132,4 °C, 112,8 bar) stattfindet.

Das Verfahren beruht auf der Entdeckung, dass sich die Endreaktionsmischung, (das Reaktionsgemisch nach Ablauf der Reaktion) bei einer Temperatur > 80 °C, einem Druck > 40 bar und einem Ammoniumhalogenid-Gehalt von > 1 Gew.-% eine bisher nicht beschriebene flüssige Phase A abscheidet, welche aus mindestens 75 Gew.-% der Gesamtmenge an gebildetem Ammoniumhalogenid und höchstens 20 Gew.-% der Gesamtmenge an gebildetem Alkylamin und Ammoniak besteht. Die gleichzeitig entstehende Ammoniak-Phase B enthält dementsprechend höchstens 25 Gew.-% der Gesamtmenge an Ammoniumhalogenid und mindestens 80 Gew.-% der Gesamtmenge an Alkylamin. Die Ammoniak-Phase B weist eine deutlich niedrigere Dichte als die Ammoniumhalogenid-Phase A auf.

Das Verfahren erlaubt eine selektive und kontinuierliche Abscheidung der einzelnen Reaktionsprodukte aus der Endreaktionsmischung ohne Zusatz von Fremdstoffen und stellt gleichzeitig sicher, daß nur ein kleiner Teil des Prozeßammoniaks vollständig verdampft und wieder kondensiert werden muß. Dadurch werden hohe Produktausbeuten bzw. - reinheiten bei niedrigen Herstellkosten gewährleistet.

Unter Ausnutzung des Dichteunterschieds können die beteiligten Phasen A und B mit gängigen Methoden der Flüssig-Flüssig-Trennung voneinander separiert werden. Vorzugsweise beträgt der Druck bei der Trennung mindestens 80 und höchstens 400 bar. Die Separation findet oberhalb des kritischen Punkts des Ammoniaks (132,4 °C, 112,8 bar) statt, da hier die Ammoniumhalogenid-Phase A mindestens 85 Gew.-% der Gesamtmenge an gebildeten Ammoniumhalogenid und höchstens 10 Gew.-% der Gesamtmenge an Alkylamin enthält. Gegebenfalls kann die Ammoniumhalogenid-Phase A während der Separation mit reinem Ammoniak extrahiert werden, um einen Restgehalt an Alkylamin zu entfernen.

Die noch bis zu 20 Gew.-% der Gesamtmenge an Alkylamin enthaltende Phase A wird vorzugsweise kontinuierlich unter Entspannung aus dem Prozeß ausgeschleust, wobei vorzugsweise der enthaltene Ammoniak verdampft und recycliert wird. Das in kristalliner Form anfallende Ammoniumhalogenid kann gegebenenfalls noch durch Waschen mit einem organischen Lösungsmittel von eventuell anhaftendem Alkylamin befreit werden.

Die von der Ammoniumhalogenid-Phase A befreite Ammoniak-Phase B, beladen mit der Hauptmenge an Alkylamin und wenig Ammoniumhalogenid, wird vorzugsweise auf einen Druck von mindestens 15 bar bei einer Temperatur von mindestens 50 °C entspannt, wobei sich eine weitere fluide Phase C abscheidet. Die gebildete flüssige Phase C enthält viel Alkylamin, wenig Ammoniumhalogenid und Ammoniak und kann aufgrund eines deutlichen Dichteunterschieds mit gängigen Methoden von der weniger dichten Ammoniakphase D separiert werden. Die separierte reine Ammoniakphase D wird vorzugsweise verdichtet und in den Prozeß zurückgeführt.

Nach Ausschleusen der Alkylaminphase C unter Entspannung wird diese vorzugsweise kontinuierlich durch Rektifikation in ihre Komponenten aufgetrennt.

Vorzugsweise beträgt bei der Reaktion das molare Verhältnis von Ammoniak und Alkylhalogenid mindestens 20:1. Vorzugsweise beträgt das molare Verhältnis von Ammoniak und Alkylhalogenid höchstens 150:1.
Vorzugsweise werden die Ströme von Ammoniak und Alkylhalogenid vor Eintritt in den Druckreaktor vorgeheizt. Vorzugsweise beträgt die Reaktionstemperatur mindestens 100°C, insbesondere mindestens 120°C und vorzugsweise höchstens 400°C, insbesondere höchstens 300 °C.

Besonders bevorzugt wird die Reaktion in überkritischem Ammoniak, d.h. oberhalb des kritischen Punkts (132,4 °C, 112,8 bar), durchgeführt. Neben den höheren Temperaturen wirken sich auch die im Vergleich zu flüssigem Ammoniak niedrigen Viskositäts- und hohen Diffusionskoeffizienten des überkritischen Mediums positiv auf Reaktionsgeschwindigkeit und Selektivität aus.

Im Verfahren werden bevorzugt Aminoalkylsilane aus den entsprechenden Alkylchloriden hergestellt. Bevorzugte Aminoalkylsilane weisen die allgemeine Formel 1

(RO)₃₋ₙR¹ₙSiR²NH₂ (1),

auf, in der
- **R**: einen gegebenenfalls durch Fluor substituierten Alkyl- oder Alkoxyalkylrest mit 1 bis 6 Kohlenstoffatomen,
- **R**^{**1**}: einen gegebenenfalls durch Fluor substituierten Kohlenwasserstoffrest mit 1 bis 12 Kohlenstoffatomen,
- **R**^{**2**}: einen gegebenenfalls durch Fluor substituierten Alkylen-Rest mit 1 bis 20 Kohlenstoffatomen, in dem einander nicht benachbarte Methyleneinheiten durch Gruppen -O- ersetzt sein können und
- **n**: den Wert 0, 1, 2 oder 3 bedeuten.

Vorzugsweise bedeutet **R** Methyl, Ethyl oder Propyl.

Vorzugsweise sind die Reste **R**^{**1**} nicht substituiert. Vorzugsweise bedeutet **R**^{**1**} einen Kohlenwasserstoffrest mit 1 bis 6 Kohlenstoffatomen, insbesondere Methyl, Ethyl, Propyl, Vinyl oder Phenyl.

Vorzugsweise sind die Reste **R**^{**2**} nicht substituiert. Vorzugsweise bedeutet **R**^{**2**} einen Alkylen-Rest mit 1 bis 6 Kohlenstoffatomen, insbesondere Methylen, Ethylen, Propylen.

Alle vorstehenden Symbole der vorstehenden Formeln weisen ihre Bedeutungen jeweils unabhängig voneinander auf. In allen Formeln ist das Siliciumatom vierwertig.

### Beispiel 1

In einem Druckreaktor (35 l Volumen) aus korrosionsbeständigem Material (Hastelloy B3, allgemein geeignet sind Hastelloy-Stähle der B- und C-Reihe) werden auf je 175 °C vorgeheizte Ströme von Ammoniak (14,7 kg/h) und 3-(Triethoxysilyl)-propychlorid (4,0 kg/h) bei einem Druck von 200 bar miteinander zur Reaktion gebracht. Nach Verlassen des Druckreaktors wird die Reaktionsmischung auf 190 °C erhitzt und in einen zweiten, baugleichen Druckreaktor überführt, in dem die Umsetzung vervollständigt wird. Die mittlere Verweilzeit im Reaktionsteil beträgt 60 min.

In einer nachgeschalteten ersten Separationsstufe wird aus dem zweiphasigen Reaktionsgemisch die schwere, untere Phase A abgetrennt und unter Entspannung in eine Trocknungsvorrichtung transferiert. Die hauptsächlich Ammoniumchlorid und Ammoniak enthaltende Phase zersetzt sich bei der Entspannung in 0,9 kg/h festes Salz und gasförmigen Ammoniak, welcher recycliert wird. Die Reinheit des gewonnenen Ammoniumchlorids beträgt 97 Gew.-%.

Der die erste Separationsstufe verlassende silanhaltige Ammoniak-Strom B wird mit 0,6 kg/h Frisch-Ammoniak beschickt, um den bei der Reaktion verbrauchten Ammoniak zu ersetzen. Vor Eintritt in die zweite Separationsstufe wird der Ammoniak-Strom auf 125 bar entspannt und auf 170 °C temperiert, wobei sich erneut ein zweiphasiges Gemisch bildet. Die untere, Silan- und Ammoniak-enthaltende Phase C wird vom Ammoniak-Strom D unter Entspannung abgetrennt, wobei der Ammoniak gasförmig entweicht und recycliert wird. Das Rohsilan wird in eine Rektifikationsapparatur transferiert und dort in die Bestandteile zerlegt. Der Destillatstrom von 3,0 kg/h (82 % der Theorie) besteht aus 3-(Triethoxysilyl)-propylamin mit einer Reinheit von 99 Gew.-%. Zusätzlich fallen noch 0,7 kg/h schwersiedende Reaktionsprodukte im Sumpf des Apparates an. Der aus der zweiten Separationsstufe entweichende Ammoniak-Strom D wird verdichtet und in den Prozeß zurückgeführt.

Raum-Zeit-Ausbeute (Ausbeute Produkt in g pro h und Liter Reaktorvolumen): 43 g/lh

### Beispiel 2 (Vergleichsbeispiel)

In einem 17-1-Stahl-Emaille-Autoklav mit Rührwerk werden 5800 g flüssiger Ammoniak eingefüllt und aufgeheizt. Nach 1 Stunde ist die Reaktionstemperatur von 75 °C bei einem Druck von 36 bar erreicht. Unter Rühren (200 Upm) werden 1580 g 3-(Triethoxysilyl)-propylamin während 2 Stunden eindosiert und anschließend noch 8 Stunden bei 75 °C weitergerührt. Nach Abkühlen der Reaktionsmischung auf 50 °C wird entspannt und der Ammoniak über einen Zeitraum von 3 Stunden verdampft. Das verbleibende Rohprodukt wird durch Filtration vom gebildeten Ammoniumchlorid (378 g, Reinheit 93 Gew.-%) getrennt und anschließend im Vakkuum destillativ aufgearbeitet. Man erhält als Destillat 1075 g 3-(Triethoxysilyl)-propylamin (74 % der Theorie, Reinheit 99 Gew.-%) und 334 g schwerflüchtige Nebenprodukte als Destillationssumpf.
Raum-Zeit-Ausbeute: < 4,5 g/lh

## Patentansprüche

1. Kontinuierliches Verfahren zur Herstellung von Alkylaminen, bei dem kontinuierliche Ströme von Ammoniak und Alkylhalogenid mit einem molaren Verhältnis von mindestens 10:1 in einem Druckreaktor zur Reaktion gebracht werden, die Endreaktionsmischung bei einer Temperatur > 80 °C, einem Druck > 40 bar und einem Ammoniumhalogenid-Gehalt von > 1 Gew.-% aus zwei Phasen besteht, die aufgetrennt werden,
**dadurch gekennzeichnet, dass** es sich um die Phasen
A, welche mindestens 75 Gew.-% der Gesamtmenge an gebildetem Ammoniumhalogenid enthält und
B, welche mindestens 80 Gew.-% der Gesamtmenge an gebildetem Alkylamin enthält, handelt und
die Auftrennung der Endreaktionsmischung oberhalb des kritischen Punkts des Ammoniaks (132,4 °C, 112,8 bar) stattfindet.

2. Kontinuierliches Verfahren zur Herstellung von Aminoalkylsilanen der allgemeine Formel 1
(RO)₃₋ₙR¹ₙSiR²NH₂ (1),
in der
R einen gegebenenfalls durch Fluor substituierten Alkyl- oder Alkoxyalkylrest mit 1 bis 6 Kohlenstoffatomen,
**R**^{**1**} einen gegebenenfalls durch Fluor substituierten Kohlenwasserstoffrest mit 1 bis 12 Kohlenstoffatomen,
R² einen gegebenenfalls durch Fluor substituierten Alkylen-Rest mit 1 bis 20 Kohlenstoffatomen, in dem einander nicht benachbarte Methyleneinheiten durch Gruppen -O- ersetzt sein können und
n den Wert 0, 1, 2 oder 3 bedeuten,
bei dem kontinuierliche Ströme von Ammoniak und dem entsprechenden Alkylhalogenid mit einem molaren Verhältnis von mindestens 10:1 in einem Druckreaktor zur Reaktion gebracht werden, die Endreaktionsmischung bei einer Temperatur > 80 °C, einem Druck > 40 bar und einem Ammoniumhalogenid-Gehalt von > 1 Gew.-% aus zwei Phasen besteht, die aufgetrennt werden,
**dadurch gekennzeichnet, dass** es sich um die Phasen
A, welche mindestens 75 Gew.-% der Gesamtmenge an gebildetem Ammoniumhalogenid enthält und
B, welche mindestens 80 Gew.-% der Gesamtmenge an gebildetem Aminoalkylsilan enthält, handelt und
die Auftrennung der Endreaktionsmischung oberhalb des kritischen Punkts des Ammoniaks (132,4 °C, 112,8 bar) stattfindet.

3. Verfahren nach Anspruch 1 oder 2, bei dem die Phase B auf einen Druck von mindestens 15 bar bei einer Temperatur von mindestens 50 °C entspannt wird, und die sich bildenden Phasen
C, welche viel Alkylamin und wenig Ammoniumhalogenid enthält und
D, welche den überwiegenden Teil des Ammoniaks enthält, aufgetrennt werden.

4. Verfahren nach Anspruch 1 bis 3, bei dem das molare Verhältnis von Ammoniak und Alkylhalogenid mindestens 20:1 beträgt.

5. Verfahren nach Anspruch 1 bis 4, bei dem die Ströme von Ammoniak und Alkylhalogenid vor Eintritt in den Druckreaktor vorgeheizt werden.

6. Verfahren nach Anspruch 1 bis 5, bei dem die Reaktion oberhalb des kritischen Punkts von Ammoniak (132,4 °C, 112,8 bar) durchgeführt wird.

## Claims

1. Continuous process for preparing alkylamines in which continuous streams of ammonia and the corresponding alkyl halide in a molar ratio of at least 10:1 are reacted in a pressure reactor, and the end reaction mixture has a temperature of > 80°C, a pressure of > 40 bar and an ammonium halide content of > 1% by weight, and comprises two phases which are separated, **characterized in that** the phases are
A which comprises at least 75% by weight of the total amount of ammonium halide formed and
B which comprises at least 80% by weight of the total amount of alkylamine formed, the separation of the end reaction mixture takes place above the critical point of ammonia (132.4°C, 112.8 bar).

2. Continuous process for preparing aminoalkylsilanes of the general formula 1
(RO)₃₋ₙR¹ₙSiR²NH₂ (1),
where
R is an optionally fluorine-substituted alkyl or alkoxyalkyl radical having from 1 to 6 carbon atoms,
**R**^{**1**} is an optionally fluorine-substituted hydrocarbon radical having from 1 to 12 carbon atoms,
**R**^{**2**} is an optionally fluorine-substituted alkylene radical having from 1 to 20 carbon atoms in which nonadjacent methylene units may be replaced by -O-groups and
n has the value 0, 1, 2 or 3,
in which continuous streams of ammonia and the corresponding alkyl halide in a molar ratio of at least 10:1 are reacted in a pressure reactor, and the end reaction mixture has a temperature of > 80°C, a pressure of > 40 bar and an ammonium halide content of > 1% by weight, and comprises two phases which are separated, **characterized in that** the phases are
A which comprises at least 75% by weight of the total amount of ammonium halide formed and
B which comprises at least 80% by weight of the total amount of aminoalkylsilane formed, the separation of the end reaction mixture takes place above the critical point of ammonia (132.4°C, 112.8 bar).

3. The process as claimed in claim 1 or 2, in which phase B is depressurized to a pressure of at least 15 bar at a temperature of at least 50°C, and the phases which form
C which comprises a lot of alkylamine and a little ammonium halide and
D which comprises the majority of the ammonia are separated.

4. The process as claimed in claims 1 to 3, in which the molar ratio of ammonia to alkyl halide is at least 20:1.

5. The process as claimed in claims 1 to 4, in which the streams of ammonia and alkyl halide are preheated before entry into the pressure reactor.

6. The process as claimed in claims 1 to 5, in which the reaction is carried out above the critical point of ammonia (132.4°C, 112.8 bar).

## Revendications

1. Procédé continu pour la préparation d'alkylamines, dans lequel des flux continus d'ammoniac et d'halogénure d'alkyle dans un rapport molaire d'au moins 10:1 sont amenés à réagir dans un réacteur sous pression, le mélange réactionnel final, à une température >80°C, une pression > 40 bars et une teneur en halogénure d'ammonium > 1% en poids, est constitué par deux phases, qui sont séparées, **caractérisé en ce qu'**il s'agit des phases
A, qui contient au moins 75% en poids de la quantité totale d'halogénure d'ammonium formé et
B, qui contient au moins 80% en poids de la quantité totale d'alkylamine formée et
la séparation du mélange réactionnel final a lieu au-dessus du point critique de l'ammoniac (132,4°C, 112,8 bars).

2. Procédé continu pour la préparation d'aminoalkylsilanes de formule générale I
(RO)₃₋ₙR¹ₙSiR²NH₂ (I),
dans laquelle
R signifie un radical alkyle ou alcoxyalkyle le cas échéant substitué par fluor comprenant 1 à 6 atomes de carbone,
R¹ signifie un radical hydrocarboné le cas échéant substitué par fluor, comprenant 1 à 12 atomes de carbone,
R² signifie un radical alkylène le cas échéant substitué par fluor, comprenant 1 à 20 atomes de carbone, dans lequel des unités méthylène non adjacentes peuvent être remplacées par des groupements -O- et
n vaut 0, 1, 2 ou 3,
dans lequel des flux continus d'ammoniac et de l'halogénure d'alkyle correspondant dans un rapport molaire d'au moins 10:1 sont amenés à réagir dans un réacteur sous pression, le mélange réactionnel final, à une température >80°C, une pression > 40 bars et une teneur en halogénure d'ammonium > 1% en poids est constitué par deux phases, qui sont séparées, **caractérisé en ce qu'**il s'agit des phases
A, qui contient au moins 75% en poids de la quantité totale d'halogénure d'ammonium formé et
B, qui contient au moins 80% en poids de la quantité totale d'aminoalkylsilane formé et
la séparation du mélange réactionnel final a lieu au-dessus du point critique de l'ammoniac (132,4°C, 112,8 bars).

3. Procédé selon la revendication 1 ou 2, dans lequel la phase B est détendue à une pression d'au moins 15 bars à une température d'au moins 50°C et les phases
C. qui contient beaucoup d'alkylamine et peu d'halogénure d'ammonium et
D. qui contient la partie principale de l'ammoniac, qui se forment sont séparées.

4. Procédé selon les revendications 1 à 3, dans lequel le rapport molaire d'ammoniac à halogénure d'alkyle est d'au moins 20:1.

5. Procédé selon les revendications 1 à 4, dans lequel les flux d'ammoniac et d'halogénure d'alkyle sont préchauffés avant d'entrer dans le réacteur sous pression.

6. Procédé selon les revendications 1 à 5, dans lequel la réaction est réalisée au-dessus du point critique de l'ammoniac (132,4°C, 112,8 bars).
